# EUROPEAN PATENT SPECIFICATION

(11) **EP 1 045 343 B1**
(45) Date of publication and mention of the grant of the patent: **02.08.2006**
(21) Application number: 00303108.5
(22) Date of filing: 13.04.2000
(51) Int. Cl.: G06T 11/00

(54) **Rendering system**
Anzeigesystem
Système de rendu

(30) Priority: 14.04.1999 JP 10667699
(43) Date of publication of application: 18.10.2000
(73) Proprietor: Sony Computer Entertainment Inc., Tokyo 107-0052 (JP)
(72) Inventor: Fukui, Toshio, Sony Computer Entertainment, Inc., Tokyo 107-0052 (JP)
(74) Representative: Hedley, Nicholas James Matthew

(56) References cited:
- EP-A- 0 800 150
- US-A- 4 768 082
- US-A- 5 003 494
- US-A- 5 218 671
- US-A- 5 341 464

## Description

### BACKGROUND OF THE INVENTION

### Technical Field of the Invention

The present invention relates to a rendering system for handling graphical images in a color environment using, for example, 256 colors and 16 colors. The invention also relates to a medium for recording the rendering system. Furthermore, the invention relates to a rendering method for handling graphical images in a subtractive-color environment using 256 colors and 16 colors that are based on, for example, red, green, and blue (so-called RGB).

### Background of the Invention

As represented by graphics-handling software, in a rendering system used in a subtractive-color environment there are prepared tools for using various colors. The tools include those for presenting color information by the RGB, and cyan, magenta, yellow, and black (so-called CMYK).

Various rendering systems as described above include those that handles full colors, and in addition, various simple systems that are used in a subtractive-color environment that uses RGB-based 256 and 16 colors. With the rendering system used in the aforementioned subtractive environment, basically, required colors are set using a device for storing colors, such as a palette, and desired colors are selected therefrom and used for rendering. In the rendering system, for example, operations that are simply executable with a single color or two colors that are selected for most rendering operations are included, but there is nothing more than that. Therefore, the system produces a problem in that the selection range for desired colors is narrow.

The document US-A-5 341 464 discloses a system for matching printer colors with the colors of an image displayed on a color monitor. The colors used are stored in a color palette table.

Also, with most of existing rendering systems used in the subtractive-color environment, a user thereof must preset colors. Also, when an additional color is necessary, the user must first store the additional color in a device for storing colors and must select the necessary color therefrom to use the color for rendering graphical images, thus producing an additional problem in that complicated operations are required.

The present invention as set out in appended system claim 1, method claim 5 and data carrier claim 13 is intended to solve these problems. Therefore, an object of the present invention is to provide a rendering system that improves the existing rendering system that can be implemented only in the full-color environment so as to be executable also in the subtractive-color environment.

Another object of the present invention is to provide a rendering system with which the operation for storing colors in the device for storing colors such as that used in the described existing rendering system can be omitted.

Another object of the present invention is to provide a medium for recording the described rendering system.

Another object of the present invention is to provide a rendering method that can be used in the subtractive-color environment.

### SUMMARY OF THE INVENTION

The problems described above are solved by the following means:
(1) A rendering system for rendering colored graphical images in a subtractive-color environment, characterized by comprising a full-color-information acquisition device, a color-storing device, a rendering mode, and a rendering device for the colored graphical images, wherein colors are stored in the color-storing device according to the rendering mode and full-color information for the graphical images which was obtained by the full-color-information acquisition device, and the colored graphical images are rendered by using the colors stored and the rendering device.
(2) A graphical-image rendering method for use in a subtractive-color environment and using a rendering system that comprises a full-color-information acquisition device, a color-storing device, a rendering mode, and a rendering device for colored graphical images, characterized by comprising a step of storing colors in the color-storing device according to the rendering mode and full-color information for the graphical images which was obtained by the full-color-information acquisition device, and a step of rendering the colored graphical images by using the colors stored and the rendering device.
(3) A graphical-image rendering method for rendering full-color graphical images in a subtractive-color environment, comprising steps of selecting colors from full-color information; setting a rendering mode for selection, storage, and use of the colors according to the full-color information; determining rendering operations for forming the graphical images in a rendering region; computing the rendering operations as full-color information; executing the rendering mode by using the full-color information obtained as a result of the computation; and implementing rendering.
(4) A storage medium for storing a program that allows a computer to read and execute a rendering method according to a rendering system that is used in a subtractive-color environment and comprises a full-color-information acquisition device, a color-storing device, a rendering mode, and a rendering device for colored graphical images, the program comprising a step of storing colors in the color-storing device according to the rendering mode and full-color information for the graphical images which was obtained by the full-color-information acquisition device, and a step of rendering the colored graphical images by using the colors stored and the rendering device.
(5) A storage medium for storing a program that allows a computer to read and execute a rendering method for rendering graphical images similar to full-color graphical images in a subtractive color environment, the program comprising a step of selecting colors from full-color information; a step of setting a rendering mode for selection, storage, and use of the colors according to the full-color information; a step of determining rendering operations for forming the graphical images in a rendering region; a step of computing the rendering operations as full-color information; a step of executing the rendering mode by using the full-color information obtained as a result of the computation; and a step of implementing rendering.
(6) A rendering-display pattern for displaying a rendering region and a palette in a subtractive-color environment, characterized by comprising at least one of an RGB input tool for inputting RGB color ratios and a gradation tool for selecting colors from a full-color gradation.

### BRIEF DESCRIPTION OF THE DRAWINGS

FIG. 1 is a flowchart for explaining a rendering system of the present invention.
FIG. 2 is a flowchart for explaining a mode-specific operation according to an embodiment of a rendering system of the present invention.
FIG. 3 is a flowchart for explaining a mode-specific operation according to another embodiment of a rendering system of the present invention.
FIG. 4 is an overall view of an example rendering system of the present invention.
FIGS. 5A and 5B individually show results of cases where gradation between two colors is applied by the rendering system of the present invention.

### DESCRIPTION OF THE EMBODIMENTS

A description will be given of a rendering system of the present invention. The rendering system of the present invention is mainly used in a subtractive-color environment that uses, for example, RGB-based 256 colors and 16 colors. Particularly, the present invention mainly handles two-dimensional graphical images in the subtractive-color environment.

The present invention has a device for storing colors (which may also be referred to as a color-storing device, hereinbelow), an automatic-retrieving mode for colors stored in the aforementioned device, and a rendering mode that automatically retrieves colors and is selected by the user as required.

The color-storing device of the present invention is, for example, a palette. The palette of the invention refers to a region that stores colors used for rendering of graphical images. Selecting a color stored in the color-storing device specifies information on the graphical-images to be rendered.

Also, in the present invention, the subtractive-color environment is not restricted to an environment solely composed of RGB-color information, but it includes semitransparent information alpha.

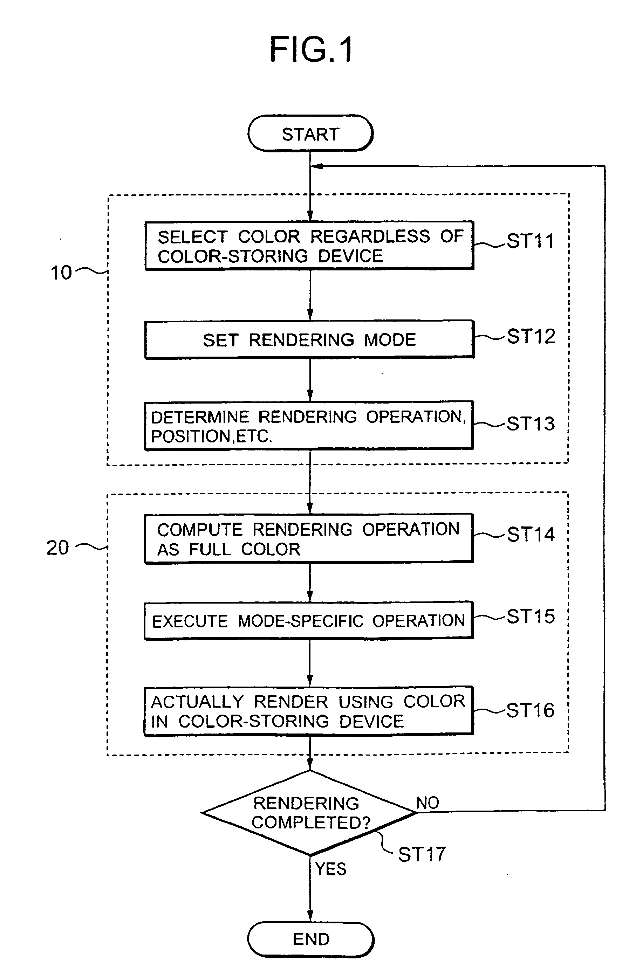

Hereinbelow, a detailed description will be given of a rendering system according to the present invention with reference to FIGS. 1 to 3.

FIG. 1 is a flowchart showing steps of rendering that is performed by the rendering system of the present invention. According to the rendering system, operations can be grouped into two operation ranges, one is an operation range 10 for steps (ST11 to ST13) that a person performs, and the other is an operation range 20 for steps (ST14 to ST16) for steps that the rendering system performs.

First of all, rendering is started (START).

In step 11 (ST11), a desired color is selected as color information. The color may be selected from the color-storing device (such as a palette) according to a conventional method, that is, method in which, for example, an RGB value is inputted using a number; a method in which an optional color is selected from full-color gradation; and a method in which a desired color is selected from color examples.

In step 12 (ST12), the user sets the rendering mode. The rendering mode of the present invention allows specification of methods for selecting the color, for storing the color in the color-storing device, and for using the color for rendering according to the color having the aforementioned full-color information. The rendering mode set in this step is implemented in step 15 (ST15) described below.

In the above, for example, the following three modes can be considered:
1) When the color-storing device does not include the color according to the full-color information, the color is selected as a new color, is stored, and is used (which is referred to as a "newly-acquire mode" or "newly acquire", hereinbelow).
2) When the color-storing device does not include the color according to the full-color information, an approximate color of the color is selected as a new color and is used (which is referred to as a "use-approximate-color mode", or "use approximate color", hereinbelow).
3) Colors not stored in the color-storing device are not used (which is referred to as a "non-rendering mode" or "non-rendering").

The above rendering modes are just examples, therefore, there can be considered various other modes, such as a mode that allows selection of an approximate-color algorithm, and a combined mode.

In this step, the rendering mode is selected as desired by the user, thereby enabling rendering that can be performed only in the full-color environment to be implemented.

Step 13 (ST13) determines, for example, rendering operations and positions. This step performs rendering operations for actually forming a graphical image, including operations for determining positions, for example, the starting point and the terminal point when a rectangle or a line is rendered using a pen tool.

In step 14 (ST14), the rendering system of the present invention computes the rendering operations in step ST13 by handling them as full-color information.

The present invention mainly handles graphical images in the subtractive-color environment that uses, for example, the RGB-based 256 colors or 16 colors, however, internal computation is performed in the full-color environment. There is no restriction to the computation method. A conventional method may be employed.

Step 15 (ST15) executes the rendering mode selected in step 12 according to the full-color information obtained in step 14.

The rendering mode of the present invention allows specification of methods for selecting a color, storing the color in the color-storing device, and using the color for rendering according to the color having the aforementioned full-color information. As mentioned in step 12 as examples, there are three types of the rendering modes.

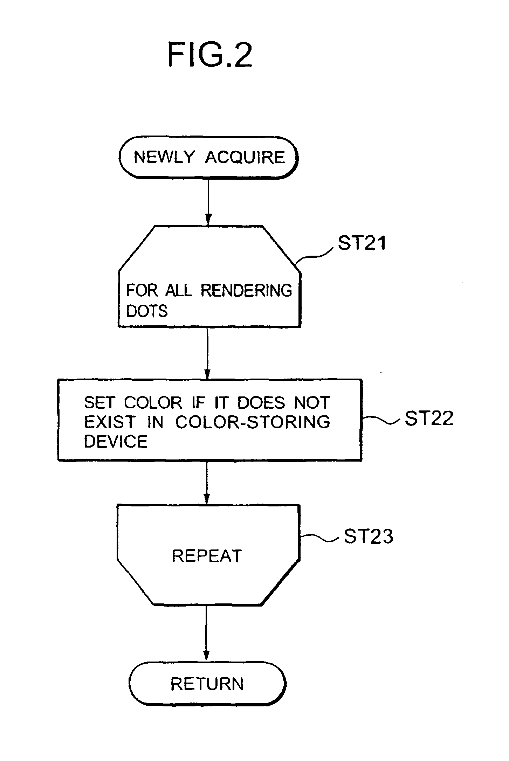

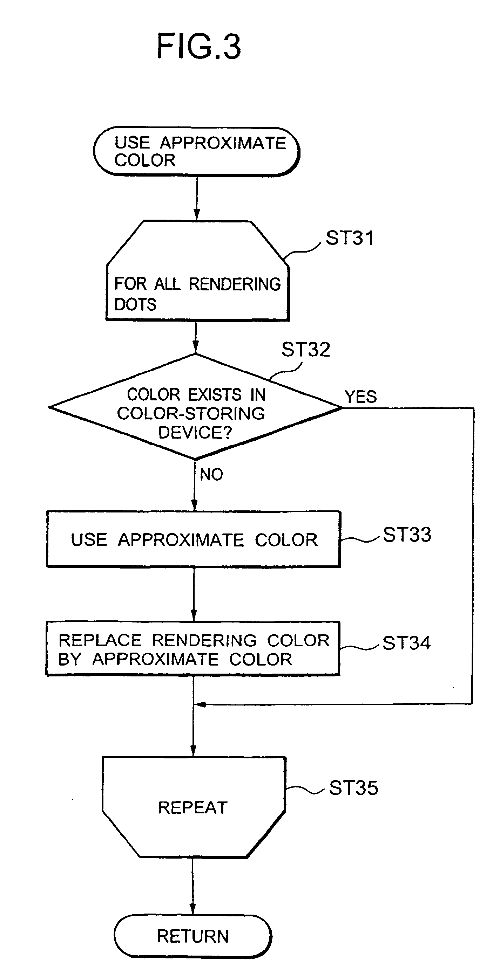

In the rendering system of the present invention, when the color according to the full-color information obtained as a result of step 14 already is preset in the color-storing device, the color is used, and rendering is implemented; when the color according to the full-color information is preset therein, the color that is most suitable to the color according to the full-color information selected by the user in ST12 is stored, and the color is used, and rendering is performed thereby. The rendering mode will be explained referring to Figs.2,3 hereinafter.

According to the above description, the color is stored in the color-storing device when the color appropriate to the color according to the full-color information is obtained. In the present invention, however, the color need not be always stored at the described time. For example, the color information may be stored in a storage medium such as a memory, thereby storing it at a stage of rendering the graphical image. Alternatively, it may be arranged such that the information is stored automatically at a later stage.

Subsequently, in step 16 (ST16), the color is selected from the color-storing device in which the color is stored in the aforementioned ST15, and rendering is actually performed.

Subsequently, step 17 (ST17) determines termination of rendering; when further rendering is performed, processing returns to ST11, and the operations from ST11 to ST16 are repeated. On the other hand, when rendering is terminated (when "Yes" in ST17), the rendering operation is terminated.

Thus, by use of the rendering system of the present invention, even in the subtractive-color environment, the rendering operation that is performed only in the full-color environment can be executed.

Hereinbelow, referring to FIGS. 2 and 3, operations in the rendering mode are described. FIGS. 2 and 3 are explanatory regarding the two modes "newly acquire" and "use approximate color" mentioned in ST12 as examples. In the present invention, in addition to these two modes, other modes can also be specified.

FIG. 2 is a flowchart of operations in the "newly acquire" rendering mode. The "newly acquire" mode allows determination as to whether or not a color that has the full-color information on a dot to be rendered, which has been computed out in ST14, is preset in the color-storing device of the rendering system. The detection can be automatically implemented.

In step 22 (ST22), if the color that has the computed full-color information on a dot is not preset in the color-storing device, the color is retrieved. Operations in step 21 (ST21) to step 23 (ST23) are repeated for all dots that will be rendered, necessary colors are set in the color-storing device, and the mode-specific operation terminates.

In the flowcharts in the present invention, retrieval operations for colors for all the dots to be rendered are presented as in the cases of step 21 (ST21) to step 23 (ST23) in FIG. 2.

Hereinbelow, referring to FIG. 3, the "use approximate color" rendering mode when it is used as a specific mode is described.

This mode also allows determination as to whether or not a color that has the full-color information on a rendering dot, which has been computed out in ST14, is preset (step 32 (ST32)). The detection can be automatically implemented.

If the color is determined to be preset in the color-storing device of the rendering system of the present invention (when Yes in ST32), determination is made whether or not a color of the full colors for the next rendering dot is preset in the color-storing device. On the other hand, if the color is determined not to be preset in the color-storing device (when "No" in ST32), a color that is most suitable to the color that has the full-color information among colors stored in the color-storing device is selected. Then, the color that has the full-color information is approximated. The color that has the full-color information is replaced by the approximate color. The operations in step 31 (ST31) to step 35 (ST35) are performed for all the rendering dots, thereby, necessary colors are selected from the color-storing device, and the mode-specific operation terminates.

The present invention allows a rendering mode to be composed by combining a plurality of the rendering modes as described above. Therefore, other rendering modes can be used, and also, modes different from the above can be combined to compose various rendering modes.

Also, the color-storing device in the rendering system of the present invention may be, for example, a device in which colors are prearranged. In this case, it may be arranged such that colors are automatically retrieved when colors are selected according to the rendering mode and the full-color information in step 14 of the present invention. According to this arrangement, the operation for retrieving colors and setting in the color-storing device is reduced, thereby allowing the user to perform the rendering operation unconsciously of the color-storing device. There is no specific restriction to the color-storing device.

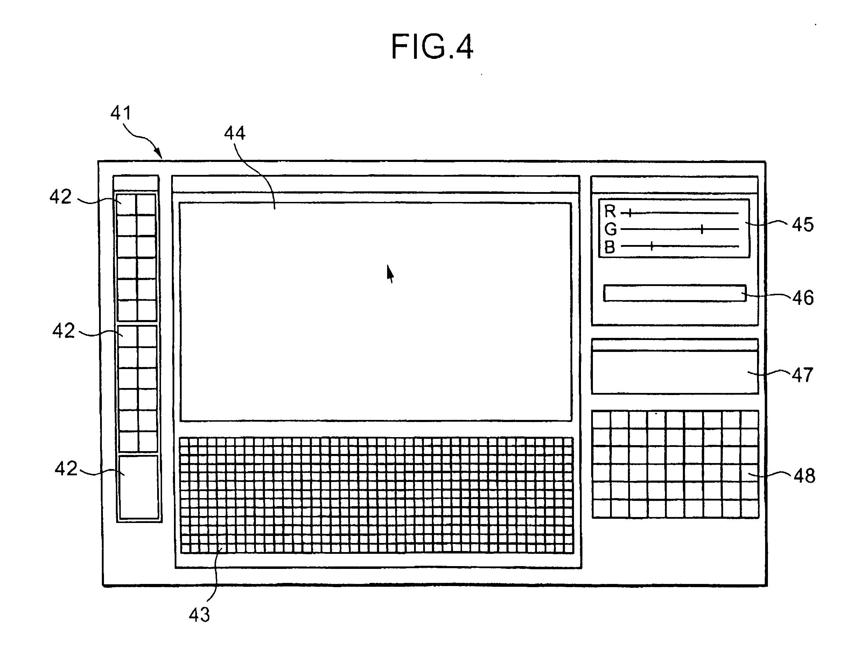

Hereinbelow, referring to FIG. 4, a description will be given of a practical example of a rendering system of the present invention. FIG. 4 is an overall view of one mode of the rendering system according to the present invention. However, it is just an example, therefore, the present invention is not restricted thereto. Also, the rendering system in FIG. 4 is used in, for example, the subtractive-color environment that uses RGB-based 256 or 16 colors; particularly, it handles two-dimensional graphical images.

A rendering system 41 of the present invention is configured of a rendering-operation tool 42 composed of rendering tools, such as a pen tool, a brush tool, a rectangle-ellipse-rendering tool, and a tool for magnifying and reducing line-drawn images; a palette 43, that is, a device for storing colors; a rendering region 44 where line-drawings, figures, and the like, are rendered; an RGB-input tool 45 for inputting an RGB ratio in a color; a full-color gradation tool 46 that allows an optional color to be selected from full-color gradations; a rendering-mode-selecting device 47 of the present invention; and color examples 48. The RGB-input tool 45 allows input using slide bars, and in addition, allows direct input of numerical values for specification of colors.

A description will be given of rendering operations for rendering, for example, line-drawings and figures, by use of the rendering system of the present invention shown in FIG. 4. According to the present invention, as described above, operations can be grouped into two ranges, one is mainly for operations that a person performs, and the other is for operations that the rendering system performs.

First, the range of the rendering operations that the person performs (10 in FIG. 1; ST11 to ST13) is described below.

First of all, a color for a graphical image to be rendered is selected. The color has the full-color information, and, regardless of colors preset in the palette 43, the color necessary for rendering is selected from one of the RGB-input tool 45, a full-color gradation tool 46, and color examples 48 so as to be used as full-color information. Of course, when the desired color is preset in the palette 43, the color may be selected from the palette 43 as full-color information. The color that has the full-color information may be selected either by adjusting a slide bar with the RGB-input tool 45 so as to obtain the full-color information or by carrying out direct
type-in input of a desired RGB value. Also, the color may be selected from the full-color gradation tool 46 that has the full-color information by using an input device such as a pointing device to input the selected color. Also, when the desired color having full-color information is preset in the color examples 48, the desired color may be selected by using an input device such as the pointing device to input the color.

Subsequently, a rendering mode that the user of the rendering system desires is selected from the rendering-mode-selecting device 47. For example, one of the described the "newly acquire" rendering mode, the "use approximate color" rendering mode, and the "non-rendering" mode is selected.

Subsequently, a rendering tool (such as, a pen tool, a brush tool, and a rectangle/ellipse-rendering tool) is selected, and actually executing rendering is performed. According to the described operations, a graphical image is inputted.

This step includes a case where straight lines, rectangles/ellipses, and the like, are rendered, and in addition, a case where a prerendered figure is colored as in a case where gradation is applied between two points specified.

Next, a description will be given of operations that the rendering system performs (11 in FIG. 1; ST14 to ST16).

The color for the graphical image which has been created in the rendering operation is computed as full-color information. According to the full-color information obtained in this step, the color to be rendered is selected.

Subsequently, a rendering-mode-specific operation is performed. The rendering mode here is the one that has been selected by the rendering-mode-selecting device 47, as described above. The rendering-mode-specific operation sets the color, which is actually rendered, in the palette 43.

In the present invention, a color to be used to render a graphical image is selected from colors set in the palette 43. The rendering system of this invention is used to render graphical images in the subtractive-color environment that uses, for example, the RGB-based 256 colors or 16 colors. Accordingly, all of the full colors cannot be displayed, while restricted number of colors of the full colors (for example, the RGB-based 256 or 16 colors) can be displayed. Therefore, according to the aforementioned full-color information, a color that is usable for presentation is set in the palette 43, the color for the graphical image is selected from the palette 43, and the graphical image is rendered using the colors. For example, in the "newly acquire" rendering mode selected, when a color according to the full-color information is not preset in the palette 43, a new color according to the full-color information is set in the palette 43, and the color is selected. Also, in the "use approximate color" mode selected, when a color according to the full-color information is not preset in the palette 43, a color that is most similar to the color is selected from colors in the palette 43. On the other hand, when a color is preset in the palette 43, the color is selected.

Subsequently, the graphical image is actually rendered in the rendering region 44 by using the color in the palette 43.

The color can be automatically retrieved into or stored in the palette 43 during processing of the rendering mode and during rendering in the rendering region 44. By the arrangement made such that a desired color is automatically stored, time required for the user to select each color could be saved. Also, user-specific retrieval of colors into the palette 43 can be implemented in a retrieval mode specified by the user (for example, a mode specified using a script).

Also, colors preset in the palette 43 can be deleted as required. To delete a color, a portion of the color to be deleted is selected by using an input device, such as a pointing device, and then, a deletion operation like a deletion command is executed. Also, colors can be automatically deleted in the order specified by the user. Also, colors can be deleted according to an optional deletion algorithm. Accordingly, the rendering system 41 can handle the number of colors, which is larger than the number of colors preset in the palette 43.

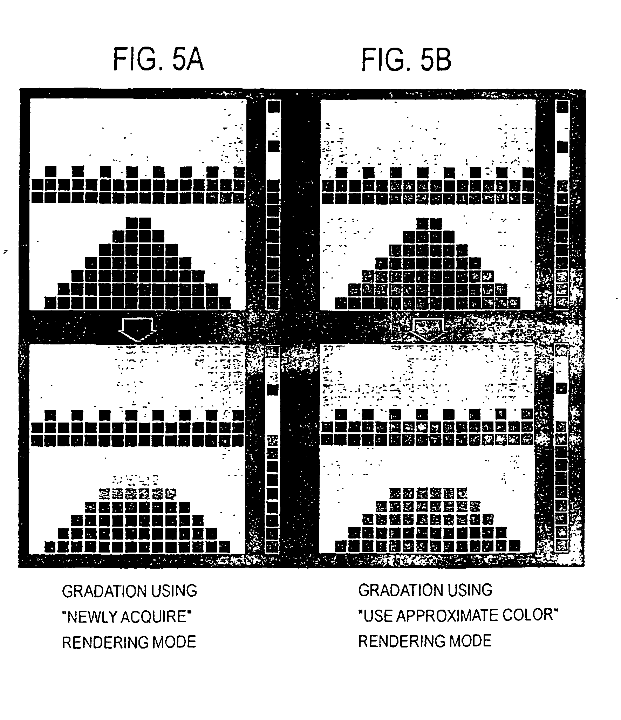

FIG. 5 shows examples in which gradation is applied to a predetermined graphical image. FIG. 5A shows a rendering result of a case where gradation from a yellow color to an orange color is applied to the lower half of the triangle portion of the graphical image when the "newly acquire" rendering mode is selected. FIG. 5B shows a rendering result of a case where gradation from the yellow color to the orange color is applied to the lower half of the triangle portion when the "use approximate color" mode is selected.

According to the rendering system of the present invention, since colors are computed using the full-color information, operations for graphical-images (for example, a brush having color depths, and gradation) which can be performed only in the full-color environment can be implemented in the subtractive-color environment.

The present invention also provides a medium for recording the above-described rendering system.

Examples of the medium include information storage media including a floppy disk (FD), a magnetic storage medium such as a magnetic tape, a magneto-optical storage medium such as an MO, an optical storage medium such as a CD-ROM, a read-only memory (ROM), and a flash memory. In the present invention, however, there are no restrictions to the above examples, and any medium that has capacity of recording the above-described rendering system can be used.

Furthermore, the present invention provides a rendering method that uses the above-described rendering system.

The rendering method has steps of selecting colors from full-color information; setting a rendering mode for selection, storage, and use of the colors according to the full-color information; determining rendering operations for forming graphical images in a rendering region; computing the aforementioned rendering operations as full-color information; executing the aforementioned rendering mode using the full-color information obtained as a result of the computation; and implementing rendering.

Contents of the individual steps are as described in steps 11 to 17 (ST11 to ST17) for the above-described rendering system.

According to the rendering system of the present invention, operations for graphical-images (for example, a brush having color depths, and gradation) which can be performed only in the full-color environment can be implemented in the subtractive-color environment.

Furthermore, according to the rendering system of the present invention, since colors can be automatically set in the color-storing device, operations for setting the colors in the color-storing device can be omitted, thereby allowing the user to render graphical images unconsciously of the color-storing device.

With the rendering system of the present invention, graphical images similar to those in the full-color environment can be rendered in the subtractive-color environment.

## Claims

1. A rendering system for rendering colored graphical images in a subtractive-color environment, comprising a full-color-information acquisition device, a color-storing device, a rendering mode i.e one of a mode for selecting new colors and a mode for approximating with colors existing in said color-scoring device, and a rendering device for the colored graphical images, **characterized in that** colors are stored during processing of said rendering mode in a color palette of said color-storing device according to said rendering mode and full-color information for the graphical images which was obtained by said full-color-information acquisition device, and the colored graphical images are rendered by using said colors stored and said rendering device.

2. The rendering system as stated in claim 1, wherein colors in the color palette may be deleted.

3. The rendering system as stated in claim 1, wherein one of a 256-color palette and a 16-color palette is used.

4. The rendering system as stated in claim 1, a rendering object is a two-dimensional graphical image.

5. A rendering method for use in a subtractive-color environment and using a rendering system that comprises a full-color-information acquisition device, a color-storing device, a rendering mode (i.e. one of a mode for selecting new colors and a mode for approximating with colors existing in said color-scoring device and a rendering device for colored graphical images, **characterized by** comprising:
a step of storing during processing of said rendering mode colors in a color palette of said color-storing device according to said rendering mode and full-color information for the graphical images which was obtained by said full-color-information acquisition device, and
a step of rendering the colored graphical images by using said colors stored and said rendering device.

6. The rendering method as stated in claim 5, wherein colors in the color palette may be deleted.

7. The rendering method as stated in claim 6, wherein one of a 256-color palette and a 16-color palette is used.

8. The rendering method as stated in claim 5, a rendering object is a two-dimensional graphical image.

9. The rendering method of claim 5 further comprising steps of:
selecting colors from full-color information;
setting a rendering mode for selection, storage, and use of the colors according to said full-color information;
determining rendering operations for forming the graphical images in a rendering region;
computing said rendering operations as full-color information;
executing said rendering mode by using the full-color information obtained as a result of the computation; and
implementing rendering.

10. The rendering method as stated in claim 9, wherein said rendering mode is one of a mode for selecting new colors and a mode for approximating with colors existing in said color-storing device.

11. The rendering method as stated in claim 9, wherein said subtractive-color environment uses either 256 colors or 16 colors.

12. The rendering method as stated in claim 9, a rendering object is a two-dimensional graphical image.

13. A storage medium for storing a program that allows a computer to read and execute a rendering method according to a rendering system that is used in a subtractive-color environment and comprises a full-color-information acquisition device, a color-storing device, a rendering mode i.e. one of a mode for selecting new colors and a mode for approximating with colors existing in said color-scoring device, and a rendering device for colored graphical images, said program comprising:
a step of storing during processing of said rendering mode, colors in a color palette of said color-storing device according to said rendering mode and full-color information for the graphical images which was obtained by said full-color-information acquisition device, and
a step of rendering the colored graphical images by using said colors stored and said rendering device.

14. The storage medium as stated in claim 13, wherein colors in the color palette may be deleted.

15. The storage medium as stated in claim 14, wherein one of a 256-color palette and a 16-color palette is used.

16. The storage medium as stated in claim 13, a rendering object is a two-dimensional graphical image.

17. The storage medium of claim 13, the program further comprising the steps of:
selecting colors from full-color information;
setting a rendering mode i.e. one of a mode for selecting new colors and a mode for approximating with colors existing in said color-scoring device for selection, storage, and use of the colors according to said full-color information;
determining rendering operations for forming the graphical images in a rendering region;
computing said rendering operations as full-color information;
executing said rendering mode by using the full-color information obtained as a result of the computation; and
implementing rendering.

18. The storage medium as stated in claim 17, wherein one of a 256-color palette and a 16-color palette is used.

19. The storage medium as stated in claim 17, a rendering object is a two-dimensional graphical image.

## Patentansprüche

1. Bildaufbereitungssystem zum Aufbereiten farbiger graphischer Bilder in einer subtraktiven Farbumgebung, mit einer Vollfarbeninformation-Erfassungsvorrichtung, einer Farbspeichervorrichtung, einer Bildaufbereitungsbetriebsart, d. h. entweder einer Betriebsart zum Auswählen neuer Farben oder einer Betriebsart für die Approximation mit in der Farbspeichervorrichtung vorhandenen Farben, und einer Bildaufbereitungsvorrichtung für die farbigen graphischen Bilder, **dadurch gekennzeichnet, dass** während der Ausführung der Bildaufbereitungsbetriebsart Farben in einer Farbpalette der Farbspeichervorrichtung in Übereinstimmung mit der Bildaufbereitungsbetriebsart und mit Vollfarbeninformationen für die graphischen Bilder, die durch die Vollfarbeninformation-Erfassungsvorrichtung erhalten wurden, gespeichert werden und die farbigen graphischen Bilder unter Verwendung der in der Bildaufbereitungsvorrichtung gespeicherten Farben aufbereitet werden.

2. Bildaufbereitungssystem nach Anspruch 1, bei dem Farben in der Farbpalette gelöscht werden können.

3. Bildaufbereitungssystem nach Anspruch 1, bei dem entweder eine Palette mit 256 Farben oder eine Palette mit 16 Farben verwendet wird.

4. Bildaufbereitungssystem nach Anspruch 1, bei dem ein aufzubereitendes Objekt ein zweidimensionales graphisches Bild ist.

5. Bildaufbereitungsverfahren für die Verwendung in einer subtraktiven Farbumgebung, das ein Bildaufbereitungssystem verwendet, das eine Vollfarbeninformation-Erfassungsvorrichtung, eine Farbspeichervorrichtung, eine Bildaufbereitungsbetriebsart, d. h. entweder eine Betriebsart zum Auswählen neuer Farben oder eine Betriebsart für die Approximation mit in der Farbspeichervorrichtung vorhandenen Farben, und eine Bildaufbereitungsvorrichtung für farbige graphische Bilder aufweist, **gekennzeichnet durch**
einen Schritt des Speicherns von Farben in einer Farbpalette der Farbspeichervorrichtung während der Ausführung der Bildaufbereitungsbetriebsart in Übereinstimmung mit der Bildaufbereitungsbetriebsart und mit Vollfarbeninformationen für die graphischen Bilder, die **durch** die Vollfarbeninformation-Erfassungsvorrichtung erhalten wurden, und
einen Schritt des Aufbereitens der farbigen graphischen Bilder unter Verwendung der gespeicherten Farben und der Bildaufbereitungsvorrichtung.

6. Bildaufbereitungsverfahren nach Anspruch 5, bei dem Farben in der Farbpalette gelöscht werden können.

7. Bildaufbereitungsverfahren nach Anspruch 6, bei dem entweder eine Palette mit 256 Farben oder eine Palette mit 16 Farben verwendet wird.

8. Bildaufbereitungsverfahren nach Anspruch 5, bei dem ein aufzubereitendes Objekt ein zweidimensionales graphisches Bild ist.

9. Bildaufbereitungsverfahren nach Anspruch 5, das ferner die folgenden Schritte enthält:
Auswählen von Farben aus Vollfarbeninformationen;
Setzen einer Bildaufbereitungsbetriebsart für die Auswahl, die Speicherung und die Verwendung der Farben in Übereinstimmung mit den Vollfarbeninformationen;
Bestimmen von Bildaufbereitungsoperationen zum Erzeugen der graphischen Bilder in einem Bildaufbereitungsbereich;
Berechnen der Bildaufbereitungsoperationen als Vollfarbeninformationen;
Ausführen der Bildaufbereitungsbetriebsart durch Verwenden der Vollfarbeninformationen, die als Ergebnis der Berechnung erhalten werden; und
Implementieren der Bildaufbereitung.

10. Bildaufbereitungsverfahren nach Anspruch 9, bei dem die Bildaufbereitungsbetriebsart entweder eine Betriebsart zum Auswählen neuer Farben oder eine Betriebsart zum Approximieren mit Farben, die in der Farbspeichervorrichtung vorhanden sind, ist.

11. Bildaufbereitungsverfahren nach Anspruch 9, bei dem die subtraktive Farbumgebung entweder 256 Farben oder 16 Farben verwendet.

12. Bildaufbereitungsverfahren nach Anspruch 9, bei dem ein aufzubereitendes Objekt ein zweidimensionales graphisches Bild ist.

13. Speichermedium zum Speichern eines Programms, das ein Computer lesen kann und das ihm ermöglicht, ein Bildaufbereitungsverfahren in Übereinstimmung mit einem Bildaufbereitungssystem, das in einer subtraktiven Farbumgebung verwendet wird und eine Vollfarbeninformation-Erfassungsvorrichtung, eine Farbspeichervorrichtung, eine Bildaufbereitungsbetriebsart, d. h. entweder eine Betriebsart zum Auswählen neuer Farben oder eine Betriebsart für die Approximation mit in der Farbspeichervorrichtung vorhandenen Farben, und eine Bildaufbereitungsvorrichtung für farbige graphische Bilder enthält, auszuführen, wobei das Programm enthält:
einen Schritt des Speicherns von Farben einer Farbpalette der Farbspeichervorrichtung während der Ausführung der Bildaufbereitungsbetriebsart in Übereinstimmung mit der Bildaufbereitungsbetriebsart und mit Vollfarbeninformationen für die graphischen Bilder, die durch die Vollfarbeninformation-Erfassungsvorrichtung erhalten wurden, und
einen Schritt des Aufbereitens der farbigen graphischen Bilder unter Verwendung der in der Bildaufbereitungsvorrichtung gespeicherten Farben.

14. Speichermedium nach Anspruch 13, bei dem Farben in der Farbpalette gelöscht werden können.

15. Speichermedium nach Anspruch 14, bei dem entweder eine Palette mit 256 Farben oder eine Palette mit 16 Farben verwendet wird.

16. Speichermedium nach Anspruch 13, bei dem ein aufzubereitendes Objekt ein zweidimensionales graphisches Bild ist.

17. Speichermedium nach Anspruch 13, bei dem das Programm ferner die folgenden Schritte enthält:
Auswählen von Farben aus Vollfarbeninformationen;
Setzen einer Bildaufbereitungsbetriebsart, d. h. entweder einer Betriebsart zum Auswählen neuer Farben oder einer Betriebsart zum Approximieren mit Farben, die in der Farbspeichervorrichtung vorhanden sind, um die Farben in Übereinstimmung mit den Vollfarbeninformationen auszuwählen, zu speichern und zu verwenden;
Bestimmen von Bildaufbereitungsoperationen, um die, graphischen Bilder in einem Bildaufbereitungsbereich zu erzeugen;
Berechnen der Bildaufbereitungsoperationen als Vollfarbeninformationen;
Ausführen der Bildaufbereitungsbetriebsart unter Verwendung der Vollfarbeninformationen, die als Ergebnis der Berechnung erhalten wurden; und
Implementieren der Bildaufbereitung.

18. Speichermedium nach Anspruch 17, bei dem entweder eine Palette mit 256 Farben oder eine Palette mit 16 Farben verwendet wird.

19. Speichermedium nach Anspruch 17, bei dem ein aufzubereitendes Objekt ein zweidimensionales graphisches Bild ist.

## Revendications

1. Système de rendu destiné à rendre des images graphiques en couleur dans un environnement de couleurs soustractives, comprenant un dispositif d'acquisition d'informations en couleur, un dispositif de stockage des couleurs, un mode de rendu c'est-à-dire soit un mode pour sélectionner de nouvelles couleurs, soit un mode pour se rapprocher des couleurs existant dans ledit dispositif de stockage des couleurs, et un dispositif de rendu pour les images graphiques en couleur, **caractérisé en ce que** les couleurs sont stockées lors du traitement dudit mode de rendu dans une palette de couleurs dudit dispositif de stockage des couleurs conformément au dit mode de rendu et aux Informations en couleur pour les Images graphiques qui ont été obtenues grâce au dit dispositif d'acquisition d'informations en couleur, et les images graphiques en couleur sont rendues en utilisant lesdites couleurs stockées et ledit dispositif de rendu.

2. Système de rendu selon la revendication 1, dans lequel des couleurs dans la palette de couleurs peuvent être supprimées.

3. Système de rendu selon la revendication 1, dans lequel soit une palette 256 couleurs, soit une palette 16 couleurs est utilisée.

4. Système de rendu selon la revendication 1, dans lequel un objet de rendu est une image graphique en deux dimensions.

5. Procédé de rendu à utiliser dans un environnement de couleurs soustractives et utilisant un système de rendu qui comprend un dispositif d'acquisition d'informations en couleur, un dispositif de stockage des couleurs, un mode de rendu c'est-à-dire soit un mode pour sélectionner de nouvelles couleurs, soit un mode pour se rapprocher des couleurs existant dans ledit dispositif de stockage des couleurs, et un dispositif de rendu pour les images graphiques en couleur, **caractérisé en ce qu'**il comprend :
une étape consistant à stocker des couleurs lors du traitement dudit mode de rendu des couleurs dans une palette de couleurs dudit dispositif de stockage, conformément au dit mode de rendu et aux informations en couleur pour les images graphiques qui ont été obtenues grâce au dit dispositif d'acquisition d'informations en couleur, et
une étape consistant à rendre les images graphiques en couleur en utilisant lesdites couleurs stockées et ledit dispositif de rendu.

6. Procédé de rendu selon la revendication 5, dans lequel des couleurs dans la palette de couleurs peuvent être supprimées.

7. Procédé de rendu selon la revendication 6, dans lequel soit une palette 256 couleurs, soit une palette 16 couleurs est utilisée.

8. Procédé de rendu selon la revendication 5, un objet de rendu est une image graphique en deux dimensions.

9. Procédé de rendu selon la revendication 5 comprenant en outre les étapes consistant à :
sélectionner des couleurs à partir des Informations en couleur ;
fixer un mode de rendu pour la sélection, le stockage et l'utilisation des couleurs conformément auxdites informations en couleur ;
déterminer des opérations de rendu pour former les images graphiques dans une zone de rendu ;
traiter lesdites opérations de rendu comme des informations en couleur ;
exécuter ledit mode de rendu en utilisant les informations en couleur obtenues à la suite du traitement ; et
mettre le rendu en application.

10. Procédé de rendu comme établi dans la revendication 9, dans lequel ledit mode de rendu est soit un mode pour sélectionner de nouvelles couleurs, soit un mode pour se rapprocher des couleurs existant dans ledit dispositif de stockage des couleurs.

11. Procédé de rendu selon la revendication 9, dans lequel ledit environnement de couleurs soustractives utilise 256 couleurs ou 16 couleurs.

12. Procédé de rendu selon la revendication 9, dans lequel un objet de rendu est une image graphique en deux dimensions.

13. Support de stockage destiné à stocker un programme qui permet à un ordinateur de lire et d'exécuter un procédé de rendu selon un système de rendu utilisé dans un environnement de couleurs soustractives et comprenant un dispositif d'acquisition d'informations en couleur, un dispositif de stockage des couleurs, un mode de rendu c'est-à-dire soit un mode pour sélectionner de nouvelles couleurs, soit un mode pour se rapprocher des couleurs existant dans ledit dispositif de stockage des couleurs et un dispositif de rendu pour les images graphiques en couleur, ledit programme comprenant :
une étape consistant à stocker lors du traitement dudit mode de rendu des couleurs dans une palette de couleurs dudit dispositif de stockage des couleurs conformément au dit mode de rendu et aux informations en couleur pour les images graphiques qui ont été obtenues grâce au dit dispositif d'acquisition d'informations en couleur, et
une étape consistant à rendre les images graphiques en couleur en utilisant lesdites couleurs stockées et ledit dispositif de rendu.

14. Support de stockage selon la revendication 13, dans lequel des couleurs dans la palette de couleurs peuvent être supprimées.

15. Support de stockage selon la revendication 14, dans lequel soit une palette 256 couleurs, soit une palette 16 couleurs est utilisée.

16. Support de selon la revendication 13 dans lequel un objet de rendu est une Image graphique en deux dimensions.

17. Support de stockage selon la revendication 13, le programme comprenant en outre les étapes consistant à :
sélectionner des couleurs à partir des informations en couleur ;
fixer un mode de rendu, c'est-à-dire soit un mode pour sélectionner de nouvelles couleurs, soit un mode pour se rapprocher des couleurs existant dans ledit dispositif de stockage des couleurs, pour la sélection, le stockage et l'utilisation des couleurs conformément auxdites Informations en couleur ;
déterminer des opérations de rendu pour former les images graphiques dans une zone de rendu ;
traiter lesdites opérations de rendu comme des informations en couleur ;
exécuter ledit mode de rendu en utilisant les Informations en couleur obtenues à la suite du traitement; et
mettre le rendu en application.

18. Support de stockage selon la revendication 17, dans lequel soit une palette 256 couleurs, soit une palette 16 couleurs est utilisée.

19. Support de stockage selon la revendication 17, dans lequel un objet de rendu est une image graphique en deux dimensions.
